# FASCICULE DE BREVET EUROPEEN

(11) **EP 3 470 999 B1**
(45) Date de publication et mention de la délivrance du brevet: **08.04.2020**
(21) Numéro de dépôt: 18199188.6
(22) Date de dépôt: 08.10.2018
(51) Int. Cl.: G06F 21/12, G06F 21/54, G06F 21/77

(54) **SÉCURISATION D'INSTRUCTIONS DE BRANCHEMENT CONDITIONNEL COMPOSÉ DANS UN PROGRAMME INFORMATIQUE EN CODE INTERMÉDIAIRE**
SICHERSTELLUNG VON BEDINGTEN VERZWEIGUNGSANWEISUNGEN IN EINEM COMPUTERPROGRAMM, DAS IN ZWISCHENCODE KODIERT IST
SECURING CONDITIONAL BRANCHING INSTRUCTIONS IN A COMPUTER PROGRAM WRITTEN IN INTERMEDIATE CODE

(30) Priorité: 13.10.2017 FR 1759639
(43) Date de publication de la demande: 17.04.2019
(73) Titulaire: IDEMIA France, 92400 Courbevoie (FR)
(72) Inventeur: LOPEZ, Sarah, 92700 COLOMBES (FR); ANDOUARD, Philippe, 92700 COLOMBES (FR); BARBU, Guillaume, 92700 COLOMBES (FR)
(74) Mandataire: Santarelli

(56) Documents cités:
- FR-A1- 2 877 118
- FR-A1- 2 994 755
- US-A1- 2013 014 256
- MICHAEL LACKNER ET AL: "Towards the Hardware Accelerated Defensive Virtual Machine Type and Bound Protection", 28 novembre 2012 (2012-11-28), SMART CARD RESEARCH AND ADVANCED APPLICATIONS, SPRINGER BERLIN HEIDELBERG, BERLIN, HEIDELBERG, PAGE(S) 1 - 15, XP047026447, ISBN: 978-3-642-37287-2 * Sections 2 & 3 *

## Description

### DOMAINE DE L'INVENTION

La présente invention concerne le domaine de la sécurité informatique. Elle concerne notamment la sécurité de programmes informatiques exécutables par une unité de traitement (par exemple embarqués dans des documents électroniques de type passeport ou cartes à puces en langage Java, « Java Card »).

### CONTEXTE DE L'INVENTION

Certaines attaques informatiques dont ces programmes sont la cible, combinent des perturbations physiques (attaques dites par « injection de fautes ») et l'exécution de logiciels malicieux prévus pour généralement révéler des données secrètes (typiquement une clé cryptographique ou un code personnel type code PIN) stockées sur la plateforme d'exécution (carte à puce ou passeport électronique typiquement), augmenter des privilèges d'utilisation du système mettant en œuvre la plateforme d'exécution, passer outre des contrôles, ou autre.

Par exemple, ces attaques consistent plus particulièrement à introduire un code malicieux dans l'environnement (ou plateforme) puis à provoquer son exécution en perturbant l'exécution normale d'une application pour déclencher l'exécution du code malicieux. Une perturbation physique de l'environnement peut être réalisée à cette fin, par exemple et de façon non exhaustive à l'aide d'un faisceau laser sur le circuit électronique, un brouillage électromagnétique du circuit, une augmentation de la température du circuit, etc.

Les logiciels ou programmes informatiques exécutés dans les plateformes informatiques sont écrits dans un premier langage informatique dit « source » (comme Java par exemple). Cependant, les fichiers utilisés pour installer ces logiciels contiennent des séquences d'éléments de représentation d'opérations dans un deuxième langage dit « intermédiaire » codant des opérations pouvant être mises en œuvre par une unité de traitement, typiquement un processeur (matériel, voire logiciel dans le cadre d'un interpréteur ou d'une machine virtuelle), et décrites dans le premier langage informatique.

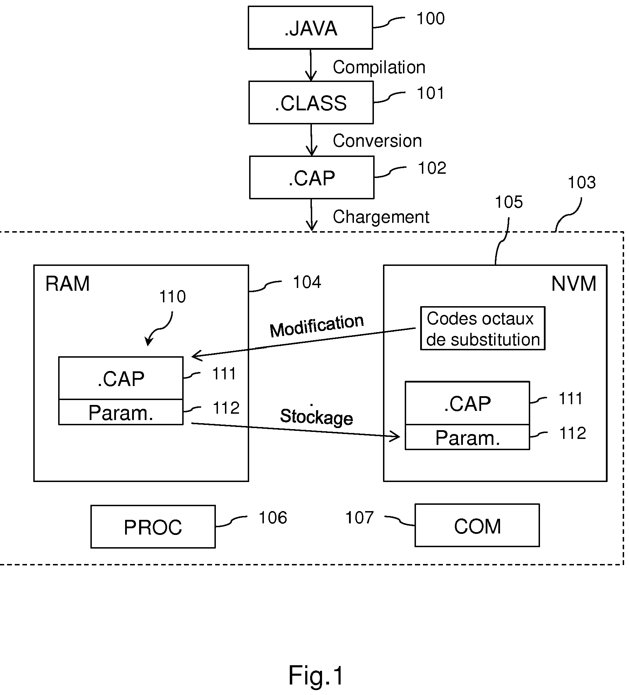

Ces fichiers dans le langage intermédiaire sont par exemple obtenus par compilation et éventuellement conversion du code source. Dans la technologie Java Card comme représenté schématiquement sur la **Figure 1****,** les fichiers source (.JAVA) d'une application (ou « applet ») sont compilés (fichiers .CLASS) puis convertis dans un langage intermédiaire (fichiers .CAP).

Les éléments de représentation dans le langage intermédiaire sont parfois appelés « codes octaux » ou « bytecodes » en terminologie anglo-saxonne, en référence à la longueur (un octet) généralement utilisée pour coder l'opération en tant que telle. Le code source du logiciel est ainsi converti, dans le langage intermédiaire, en un tableau ou une succession de *bytecodes.*

Les bytecodes peuvent être deux types : les bytecodes d'instruction et les bytecodes de paramètre.

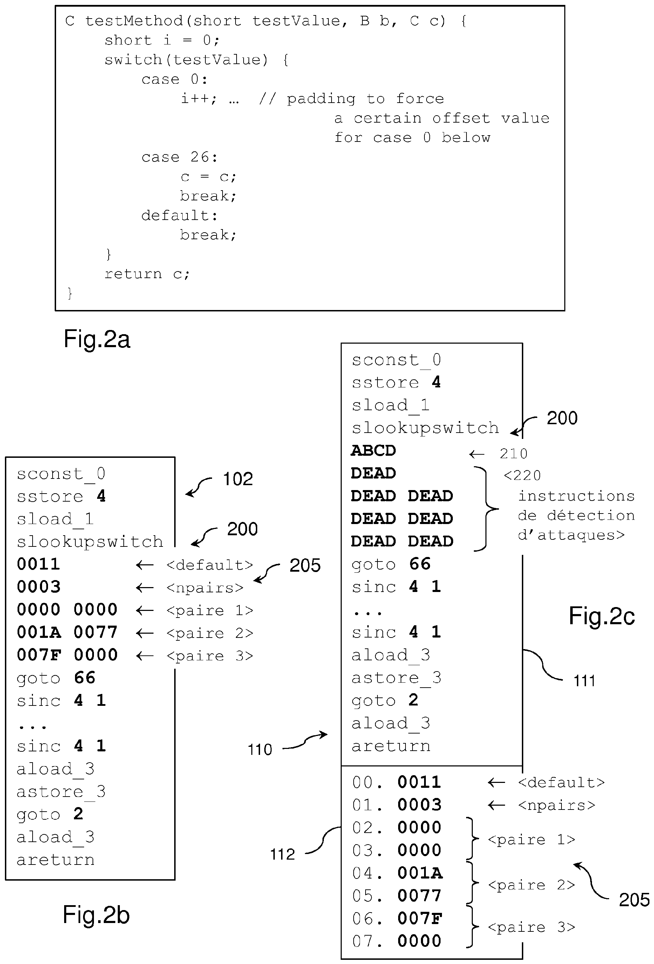

La plupart des instructions sont représentées, dans le langage intermédiaire, par un unique bytecode d'instruction formé d'un code d'opération (« opcode » selon la terminologie anglo-saxonne, sur un octet le plus souvent). C'est par exemple le cas du premier bytecode (correspondant à la première ligne) représenté sur la **Figure 2b** qui est le code intermédiaire correspondant au code source de la **Figure 2a****.**

L'exécution du logiciel est séquentielle, passant de bytecode en bytecode. Il est connu certaines instructions (par exemple « goto 66 » sur la **Figure 2b**) qui permettent un saut direct d'exécution vers un autre bytecode du logiciel (ici le bytecode à l'adresse « 66 », c'est-à-dire 66 octets après le bytecode courant).

Certaines instructions en langage intermédiaire requièrent un ou plusieurs paramètres, parfois en un nombre variable, de telle sorte que ceux-ci sont définis dans des bytecodes supplémentaires. Il s'agit de bytecodes de paramètre qui suivent généralement directement le bytecode d'instruction auquel ils se rattachent.

C'est typiquement le cas des instructions de branchement conditionnel composé (également connues sous l'appellation anglo-saxonne « associative branch instruction »), par exemple les instructions Java ilookupswitch, slookupswitch, itableswitch, stableswitch (correspondant à la fonction « switch » dont les conditions sont définies au travers de blocs « case »). L'exemple de la **Figure 2b** comprend par exemple le bytecode d'instruction « slookupswitch » (qui est un opcode seul), complété de huit (mais ce nombre peut varier) bytecodes de paramètre définissant les différents blocs « case » de la fonction « switch ».

Un bytecode de paramètre ne doit normalement pas être exécuté tout seul car il ne s'agit pas d'un code d'opération (opcode) même s'il peut avoir la même valeur qu'un code d'opération. Le bytecode de paramètre n'est normalement accessible (et donc utilisé) que lors de l'exécution du bytecode d'instruction auquel il correspond.

Ainsi, un pirate peut configurer une fonction « switch » malicieuse au sein de laquelle les conditions (blocs « case ») correspondent à un ou plusieurs bytecodes de paramètre malicieux codant une opération de piratage souhaitée (si ces bytecodes de paramètre étaient exécutés en tant que bytecodes d'instruction). Puis, le pirate déroute l'exécution normale de la fonction « switch » codée, de sorte à exécuter le ou les bytecodes malicieux comme s'il s'agissait de bytecodes d'instruction.

Dans l'exemple de la **Figure 2b****,** le pirate peut ainsi dérouter l'exécution du code pour faire exécuter les bytecodes de paramètre « 001A » « 0077 » (qui normalement définit le bloc « case 26 »). L'exécution malicieuse de ces bytecodes de paramètre correspond ainsi aux bytecodes d'instruction « nop aload_2 nop areturn », provoquant le retour de la valeur b passée en paramètre de la fonction testMethod de la **Figure 2a****.** L'appel à cette fonction en déroutant son exécution normale vers ces bytecodes malicieux conduit à une confusion de type entre les classes B et C, ce qu'exploite le pirate pour accéder à des données secrètes.

Dans le document FR 2 994 755, une contremesure à ce type d'attaque consiste par exemple à modifier les éléments de représentation (bytecodes) tels que connus de façon publique par d'autres éléments de représentation connus de la seule plateforme d'exécution du logiciel. Un pirate aura donc très difficilement connaissance de la signification du code intermédiaire, et ne pourra pas insérer du code malicieux pour contrôler des actions malicieuses souhaitées.

Cette contremesure n'est pas satisfaisante. Notamment, elle est exigeante en termes de ressources d'exécution. En particulier, chaque instruction exécutée doit être convertie ce qui requiert l'exécution de deux opérations « ou exclusif » (XOR) additionnelles.

On connaît également du document US 8 893 275, la protection d'un bytecode d'appel à une méthode en prévoyant l'ajout d'un bytecode de détection d'attaque juste après l'appel à la méthode. Ainsi, un pirate ne peut dérouter l'exécution normale en sautant l'appel à la méthode, au risque d'exécuter le bytecode de détection d'attaque.

Cette contremesure n'est également pas satisfaisante. En particulier, elle requiert l'ajout d'un bytecode, ce qui décale tous les bytecodes suivants dans le logiciel et donc peut nécessiter de recalculer des sauts pointant vers un de ces bytecodes suivants.

### RESUME DE L'INVENTION

La présente invention vise à améliorer cette situation, et notamment la sécurité des logiciels contre l'exploitation de bytecodes de paramètre pour faire exécuter une opération malicieuse. L'invention vise ainsi la protection des instructions formées d'un code d'opération (sous forme d'un bytecode) suivi de multiples paramètres (sous forme de bytecodes additionnels).

Dans ce contexte, l'invention concerne tout d'abord un procédé de sécurisation d'un programme informatique en langage intermédiaire exécutable par une unité de traitement (par exemple un interpréteur ou une machine virtuelle type JVM Java Virtual Machine), le programme informatique comprenant des instructions formées chacune d'un code d'opération (opcode) suivi de paramètres optionnels (c'est-à-dire zéro paramètre, un ou plus), le procédé comprenant une étape de mémorisation des instructions en mémoire où chaque code d'opération mémorisé (e.g. bytecode d'instruction) est suivi (immédiatement) de champs optionnels de paramètres (e.g. bytecodes de paramètre) pour stocker les paramètres optionnels correspondants, le procédé étant caractérisé en ce que :
une pluralité de paramètres d'une même première instruction du programme informatique est stockée dans une zone mémoire cible autre (distincte et ne se chevauchant pas) que les champs optionnels de paramètres qui font suite immédiate, dans la mémoire, au code d'opération de la première instruction (et donc pas dans les champs optionnels de paramètres normalement prévus à cet effet),
au moins l'un des champs optionnels de la première instruction comporte une information d'adresse mémoire désignant la zone mémoire cible où la pluralité de paramètres est stockée.

La présence de l'information d'adresse mémoire permet à l'unité de traitement de pouvoir retrouver aisément (sans coût de traitement important) les paramètres nécessaires à la bonne exécution de cette première instruction.

Par ailleurs, grâce au déplacement des paramètres dans une autre zone mémoire que celle faisant suite à l'opcode associé à la même instruction, un pirate ne peut plus faire exécuter un bytecode de paramètre comme s'il s'agissait d'une instruction, par simple saut du bytecode (opcode) associé.

La sécurité du logiciel en langage intermédiaire est ainsi renforcée. De plus, l'utilisation de l'espace mémoire normalement affecté aux paramètres pour recevoir l'information d'adresse mémoire (et possiblement d'autres codes comme décrits par la suite) ne nécessite pas l'introduction d'un nouveau bytecode à la suite immédiate dudit espace mémoire et donc le décalage de bytecodes suivants. La sécurisation du logiciel selon l'invention permet donc de ne pas toucher au reste du code.

L'invention concerne également l'exécution d'un tel logiciel sécurisé. Aussi, elle vise par ailleurs un procédé d'exécution, par une unité de traitement, d'un programme informatique stocké en mémoire dans un langage intermédiaire,
le programme informatique comprenant des instructions dans une première zone mémoire où, pour chaque instruction, un code d'opération est suivi de champs optionnels de paramètres pour stocker des paramètres optionnels de l'instruction, le procédé étant caractérisé en ce qu'il comprend, lors de l'exécution du code d'opération d'une première instruction du programme informatique, les étapes suivantes :
obtenir, d'un des champs optionnels de paramètres qui font suite immédiate audit code d'opération, une information d'adresse mémoire désignant une zone mémoire cible autre que ces champs optionnels de paramètres,
lire, dans la zone mémoire cible à l'aide de l'information d'adresse mémoire obtenue, une pluralité de paramètres associés à la première instruction, et
exécuter ladite première instruction à l'aide des paramètres ainsi lus.

Une telle exécution est sûre. Elle empêche un pirate de sauter l'exécution du code d'opération aux fins de faire exécuter des paramètres en tant qu'instructions, car ces paramètres ont été déportés dans une autre zone mémoire.

Corrélativement, l'invention concerne aussi un dispositif informatique comprenant une unité de traitement, une mémoire qui lui est reliée et un programme informatique en langage intermédiaire exécutable par l'unité de traitement, le programme informatique comprenant des instructions formées chacune d'un code d'opération suivi de paramètres optionnels, le dispositif étant configurée pour :
mémoriser des instructions en mémoire où chaque code d'opération mémorisé est suivi de champs optionnels de paramètres pour stocker les paramètres optionnels correspondants,
stocker une pluralité de paramètres d'une même première instruction du programme informatique dans une zone mémoire cible autre que les champs optionnels de paramètres qui font suite immédiate, dans la mémoire, au code d'opération de la première instruction, et
écrire au moins l'un des champs optionnels pour qu'il comporte une information d'adresse mémoire désignant la zone mémoire cible où la pluralité de paramètres est stockée.

Elle concerne également un dispositif informatique comprenant une unité de traitement, une mémoire qui lui est reliée et un programme informatique en langage intermédiaire exécutable par l'unité de traitement, le programme informatique comprenant des instructions dans une première zone mémoire où, pour chaque instruction, un code d'opération est suivi de champs optionnels de paramètres pour stocker des paramètres optionnels de l'instruction, le dispositif étant configurée pour effectuer les actions suivantes, lors de l'exécution du code d'opération d'une première instruction du programme informatique :
obtenir, d'un des champs optionnels de paramètres qui font suite immédiate audit code d'opération, une information d'adresse mémoire désignant une zone mémoire cible autre que ces champs optionnels de paramètres,
lire, dans la zone mémoire cible à l'aide de l'information d'adresse mémoire obtenue, une pluralité de paramètres associés à la première instruction, et
exécuter ladite première instruction à l'aide des paramètres ainsi lus.

Ces dispositifs présentent les mêmes avantages que ceux des procédés (qu'ils mettent en œuvre) décrits ci-dessus.

Des caractéristiques optionnelles des procédés selon l'invention sont par ailleurs définies dans les revendications dépendantes. Les dispositifs selon l'invention peuvent également être configurés pour mettre en œuvre ces caractéristiques optionnelles.

Dans un mode de réalisation, les autres champs optionnels de paramètres prévus pour stocker la pluralité de paramètres comportent des codes octaux (i.e. bytecodes) de substitution non liés auxdits paramètres et en nombre équivalent aux codes octaux formant les paramètres qu'ils remplacent. Cette disposition garantit que le format conventionnel de l'instruction est conservé. Aussi, la taille du code n'est pas modifiée, et il n'est nul besoin de mettre à jour les sauts d'instruction pointant sur le code qui suit la première instruction.

Dans un mode de réalisation particulier, les codes octaux de substitution comprennent une ou plusieurs instructions de détection d'une attaque dont l'exécution est indicatrice d'une erreur d'exécution du programme informatique. Cela permet de détecter efficacement la mise en œuvre de l'attaque décrite plus haut, à savoir l'exécution isolée d'un bytecode normalement dédié à un ou plusieurs paramètres. On voit ici que la nature même du champ optionnel de paramètre est modifiée car ce dernier contient désormais une instruction de substitution.

L'indication d'une erreur d'exécution peut être exploitée par le dispositif pour la mise en œuvre de contremesures, par exemple le blocage du dispositif électronique concerné (blocage du document électronique), l'envoi d'un message d'alerte à une entité externe, l'écriture de la détection d'une attaque dans un journal, etc.

Dans un autre mode de réalisation, tous les paramètres de ladite première instruction sont stockés dans la zone mémoire cible, et tous les champs optionnels de paramètres prévus pour les stocker en mémoire contiennent un nombre équivalent de codes octaux de substitution, incluant l'information d'adresse mémoire. Une sécurisation de l'instruction est ainsi obtenue sur l'ensemble des paramètres qui la compose.

Dans un autre mode de réalisation, les instructions du programme informatique sont mémorisées dans une première zone mémoire logique continue (qui inclut donc les champs optionnels de paramètres initialement prévus pour stocker les paramètres) et la zone mémoire cible est distincte de la première zone mémoire logique au sein de la même mémoire physique. On entend ici par « distincte » le fait qu'aucune portion de la zone mémoire cible n'est incluse dans la première zone mémoire.

Par cette disposition, il est plus difficile pour un pirate d'accéder à la zone mémoire cible pour tenter d'y exécuter, sous forme d'instruction, des paramètres malicieux.

Dans un mode de réalisation particulier, la première zone mémoire est une zone mémoire exécutable par l'unité de traitement et la zone mémoire cible est une zone mémoire non-exécutable par l'unité de traitement. Le contrôle de l'exécutabilité ou non d'une zone mémoire peut être réalisé de façon classique au niveau matériel ou logiciel.

Cette disposition empêche ainsi tout paramètre malicieux défini par un pirate d'être exécuté, dès lors que le logiciel malicieux est sécurisé selon l'invention.

Dans un autre mode de réalisation, ladite première instruction est une instruction de branchement conditionnel composé, par exemple l'une des instructions ilookupswitch, slookupswitch, itableswitch, stableswitch du langage Java, chacune étant formée d'un bytecode d'instruction (composé d'un unique opcode) suivi de plusieurs bytecodes de paramètre. Une telle instruction étant largement répandue dans les logiciels, l'invention permet de sécuriser un grand nombre de programmes informatiques.

Dans un autre mode de réalisation, l'information d'adresse mémoire est mémorisée dans le premier champ optionnel de paramètres faisant suite immédiate, en mémoire, au code d'opération de la première instruction. Cette disposition permet d'éviter une gestion complexe de saut de bytecodes après le code d'opération (opcode), pour récupérer les paramètres de l'instruction. Les adaptations de l'unité de traitement pour traiter correctement les instructions modifiées selon l'invention sont donc minimes (simplement utiliser le premier champ/bytecode de paramètre comme information d'adresse pointant sur les paramètres définissant les conditions de l'instruction).

Dans un autre mode de réalisation, l'information d'adresse mémoire est une adresse mémoire de la zone mémoire cible, masquée à l'aide d'une valeur aléatoire. Ainsi, le pirate ne peut savoir où sont mémorisés les paramètres, notamment un éventuel paramètre malicieux qu'il souhaite faire exécuter comme une simple instruction. Cette protection est d'autant plus forte qu'une nouvelle valeur aléatoire peut être tirée pour chaque nouveau programme informatique. Bien entendu, l'unité de traitement a accès à la valeur aléatoire utilisée, aux fins de démasquer l'information d'adresse mémoire masquée.

Dans un autre mode de réalisation, une ou plusieurs pluralités de paramètres d'une ou plusieurs deuxièmes instructions du programme informatique sont également stockées dans la zone mémoire cible, à la suite des paramètres de la première instruction (i.e. dans des zones successivement adjacentes). En sécurisant chaque instruction dotée de plusieurs paramètres par les mécanismes de l'invention, on empêche toute possibilité au pirate de mettre en œuvre l'attaque décrite ci-dessus.

Par ailleurs, l'usage de zones successivement adjacentes permet de définir chaque zone par un simple offset (typiquement un ou deux octets) par rapport à une zone précédente, ce qui réduit l'espace mémoire nécessaire à la définition des zones (contrairement à une adresse mémoire complète (typiquement 3 ou 4 octets). Ainsi, les paramètres stockés dans la mémoire correspondent à une liste de paramètres, et chaque adresse de paramètres est simplement un index dans cette liste.

Dans un autre mode de réalisation, le procédé est réalisé lors du chargement du programme informatique en mémoire non volatile d'une entité électronique (donc lors de l'installation du programme dans cette entité). Il peut s'agir d'un traitement à la volée, réalisé par l'entité électronique cible. Ainsi, le pirate ne peut intervenir sur les mécanismes de substitution et déplacement prévus par l'invention. Cette disposition renforce la sécurisation du programme. En variante toutefois, le procédé peut être réalisé lors de la compilation d'un programme informatique source en un programme informatique en langage intermédiaire.

Dans un autre mode de réalisation, le programme informatique en langage intermédiaire est une applet Java.

Dans un mode de réalisation relatif au procédé d'exécution du programme informatique, au moins un des champs optionnels de paramètres de la première instruction comprend une instruction de détection d'une attaque, ainsi si l'unité de traitement accède et exécute ledit champ optionnel comprenant l'instruction de détection d'une attaque, une erreur d'exécution du programme informatique est générée.

L'invention peut également avoir pour objet un produit programme d'ordinateur comprenant des instructions adaptées à la mise en œuvre de chacune des étapes de l'un des procédés décrits précédemment lorsque ledit programme est exécuté sur un ordinateur. Un tel produit programme d'ordinateur selon l'invention présentant des avantages similaires à ceux exposés précédemment en lien avec les procédés.

### BREVE DESCRIPTION DES FIGURES

D'autres particularités et avantages de l'invention apparaîtront encore dans la description ci-après, illustrée par les dessins ci-joints, dans lesquels :
- la **figure 1** illustre schématiquement la formation classique d'un programme en langage intermédiaire, ainsi qu'un chargement d'un tel programme dans un dispositif électronique selon des modes de réalisation de l'invention ;
- la **figure 2a, 2b** et **2c** illustrent respectivement un exemple de code source en Java **(****Figure 2a****),** de code intermédiaire correspondant selon les techniques de l'état de l'art **(****Figure 2b****)** et de code intermédiaire modifié selon les enseignements de la présente invention **(****Figure 2c****)** ;
- la **figure 3** illustre un autre exemple de code intermédiaire comprenant deux instructions de branchement conditionnel composé dans une version classique et dans une version modifiée selon les enseignements de l'invention ;
- la **figure 4** illustre, à l'aide d'un ordinogramme, des étapes d'un procédé de chargement et de sécurisation d'un programme informatique selon des modes de réalisation de l'invention ; et
- la **figure 5** illustre, à l'aide d'un ordinogramme, des étapes d'un procédé d'exécution d'un programme informatique modifié, selon des modes de réalisation de l'invention.

### DESCRIPTION DETAILLEE DE MODES DE REALISATION DE L'INVENTION

Un programme informatique est écrit dans un premier langage informatique dit « langage source ». Par exemple, ce langage est un langage interprété. Ce langage peut être Java. Le programme (ou logiciel, ou application, ou « applet » en terminologie anglo-saxonne) est écrit (ou représenté) sous la forme d'un fichier informatique 100 (**Figure 1**), par exemple avec une extension en « .JAVA ».

L'invention ne se limite toutefois pas à ce langage. L'invention peut trouver des applications avec d'autres langages, notamment d'autres langages interprétés ou les microcodes.

Ce programme informatique est ensuite compilé. Un fichier informatique 101 est alors obtenu, par exemple avec une extension en « .CLASS ». Ce fichier comporte alors des éléments de représentation d'un langage intermédiaire représentant les opérations du programme informatique décrites dans le langage source. Le fichier peut ensuite subir une transformation pour obtenir une version binaire exécutable par exemple un fichier 102 avec une extension en « .CAP ». D'une manière générale, les fichiers avec une telle extension contiennent une représentation d'un ou plusieurs fichiers Java compilés.

Cette représentation est réalisée au travers de codes octaux ou « bytecodes ». Les bytecodes sont généralement composés d'un code d'opération (opcode) définissant une instruction particulière (par exemple « load », « store », « add », etc.). On parle alors de bytecode d'instruction (dans la mesure où il contient un opcode).

Certaines instructions dans le langage intermédiaire comportent un nombre variable de paramètres, lesquels sont définis dans des bytecodes additionnels qui font suite au bytecode d'instruction. On parle alors de bytecode de paramètre.

C'est le cas par exemple des instructions de branchement conditionnel composé (ou « associative branch instruction » en terminologie anglo-saxonne) dont un exemple est donné aux lignes 4 à 9 de la **Figure 2b** et qui incluent les instructions Java ilookupswitch, slookupswitch, itableswitch, stableswitch. Ces dernières codent la fonction Java « switch » du code source **(****Figure 2a****),** et sont formées d'un bytecode d'instruction 200 (composé d'un unique opcode précisant l'une des quatre instructions ci-dessus) suivi de plusieurs bytecodes de paramètre 205 définissant les différentes conditions de la fonction « switch » (définissant donc les différents blocs « case » et « default »).

Les instructions de branchement conditionnel composé sont définies comme étant des instructions à branches conditionnelles où chaque branche prend une (ou plusieurs) valeur en entrée et choisit sa destination (code à exécuter si la condition est remplie) en associant une valeur particulière d'entrée ou une gamme de valeurs d'entrée avec une destination particulière.

Les instructions ilookupswitch et slookupswitch (idem pour itableswitch et stableswitch) diffèrent uniquement par le typage <t> des données qu'elles manipulent (<t>='i' pour integer, soit des entiers, et <t>='s' pour short, soit des entiers courts).

Les paramètres de l'instruction <t>lookupswitch sont basiquement une liste de couples (valeur, offset) précisant à quelle instruction sauter (décalage relatif défini par l'offset) pour les différentes valeurs évaluées. Cette instruction est définie par les bytecodes suivants en référence à la **Figure 2b****.** Il est à noter que si en pratique les bytecodes du programme informatique en langage intermédiaire sont enregistrés les uns à la suite des autres, il est classique d'adopter des représentations (comme sur la Figure) par ligne pour une meilleure lisibilité. Ainsi, l'instruction <t>lookupswitch est composée :
bytecode ou ligne 1 (à compter de slookupswitch) : bytecode d'instruction
   - 1 octet contenant le code d'opération (opcode, soit slookupswitch, soit ilookupswitch)
bytecode ou ligne 2 : bytecode de paramètre sur le cas par défaut (« 0011 » sur la **Figure 2b****)**
   - 2 octets contenant l'offset pour le cas « par défaut » (« default » dans la fonction switch)
bytecode ou ligne 3 : bytecode de paramètre sur le nombre (npairs) de valeurs de test conditionnel (« 0003 » sur la **Figure 2b****)**
   - 2 octets contenant le nombre de paires (valeur, offset)
bytecodes ou lignes 4 à 4+npairs-1 (lignes 4 à 6 sur la Figure) : bytecodes de paramètre qui codent une paire (valeur, offset) (« 0000 0000 » puis « 001A 0077 » puis « 007F 0000 » sur la **Figure 2b****)**
   - 2 ou 4 octets (selon le type <t>) contenant la valeur de test conditionnel (la valeur associée au « case » dans la fonction switch en code source)
   - 2 octets contenant l'offset associé

Les paramètres de l'instruction <t>tableswitch sont basiquement une liste d'offsets précisant à quelles instructions sauter (décalages relatifs définis par les offsets) pour toutes les valeurs entre une valeur basse (lower) et une valeur haute (upper) testées. Cette instruction est définie par les bytecodes suivants :
bytecode 1 : bytecode d'instruction
   - 1 octet contenant le code d'opération (opcode, soit stableswitch, soit itableswitch)
bytecode 2 : bytecode de paramètre sur le cas par défaut
   - 2 octets contenant l'offset pour le cas « par défaut » (« default » dans la fonction switch)
bytecode 3 : bytecode de paramètre définissant la valeur basse (lower) de test
   - 2 ou 4 octets contenant la valeur basse
bytecode 4 : bytecode de paramètre définissant la valeur haute (upper) de test
   - 2 ou 4 octets contenant la valeur haute
bytecodes 5 à 5+upper-lower : bytecodes de paramètre qui contiennent un offset pour chacune des valeurs entre 'lower' et 'upper' (généralement dans l'ordre croissant des valeurs de test)
   - 2 octets contenant l'offset associé

Le fichier 102 est destiné à être chargé dans un dispositif informatique 103, par exemple un document électronique (passeport électronique, carte bancaire, carte d'assuré social, carte SIM, carte d'identité, permis de conduire, etc.) comme utilisé dans la suite de la description. En variante, d'autres dispositifs électroniques peuvent être envisagés, incluant un transpondeur sans fil (RFID), un téléphone mobile, une clé USB à microcircuit, une carte SD à microcircuit, une montre, un GPS, un ordinateur, une voiture, etc.

Dans le cas d'un programme informatique réalisé dans le langage Java, le document électronique dispose d'un environnement d'exécution pour ce langage, incluant un interpréteur ou machine virtuelle Java. Un tel document est alors appelé « Java Card » en terminologie anglo-saxonne.

Le dispositif 103 comporte une unité de mémoire vive 104 pour stocker de manière non durable, notamment, des données de calcul utilisées lors de la mise en œuvre d'un procédé conforme à l'invention. Le dispositif comporte par ailleurs une mémoire non volatile (NVM pour « non-volatile memory » en anglais) 105 (par exemple du type EEPROM) pour stocker, par exemple, un programme d'ordinateur d'installation de programmes informatiques, selon un mode de réalisation, pour son exécution par un processeur (non représenté) d'une unité de traitement 106 (PROC) du dispositif. Les unités de mémoire 104 et 105 peuvent stocker d'autres données comme il est décrit dans la suite.

Le dispositif comporte par ailleurs une unité de communication 107 (COM), par exemple pour le chargement du fichier 102.

Dans un mode de réalisation décrit ici, la sécurisation du programme informatique formé du fichier 102 est réalisée lors du chargement du fichier 102 en mémoire non volatile 105 du dispositif informatique 103. Dans ce cas, les modifications du fichier 102 peuvent être réalisées par un module de chargement (connu sous le terme anglo-saxon de « loader ») prévu dans le dispositif informatique 103. Bien entendu, les modifications apportées au fichier 102 telles que décrites par la suite peuvent être réalisées à d'autres moments, par exemple lors de la compilation/conversion du fichier source 100 en le fichier 102, ou entre la compilation et le chargement, par exemple lors de son transfert via des supports de stockage intermédiaire ou de sa transmission sur un réseau de communication.

Lors du chargement du fichier 102 dans le dispositif informatique 103, chaque instruction du fichier 102 est mémorisée en mémoire 105 où chaque code d'opération mémorisé est suivi (immédiatement) de champs optionnels de paramètres pour stocker les paramètres optionnels correspondants (s'il y en a). La **Figure 2b** montre le stockage conventionnel du fichier 102 obtenu par compilation du code source de la **Figure 2a****.** Par exemple, la fonction « switch » est convertie et stockée en un bytecode d'instruction « slookupswitch », suivi de huit bytecodes ou champs (en cinq lignes sur la Figure) de paramètres pour définir les conditions et destinations de la fonction « switch ».

Selon l'invention cependant, une pluralité de paramètres (préférentiellement tous) d'une même première instruction (typiquement slookupswitch de la **Figure 2b****)** est stockée dans une autre zone mémoire (zone mémoire cible) que celle prévue pour les champs optionnels de paramètres qui font suite immédiate, dans la mémoire, au code d'opération (slookupswitch) de la première instruction. Selon l'invention, les paramètres définissant les blocs « case » de la fonction switch ne sont donc plus stockés à la suite de l'opcode slookupswitch.

Ils sont déplacés dans une table additionnelle de paramètres 112, après le tableau de bytecodes du fichier 102, et remplacés par des codes octaux de substitution. En pratique, il s'agit de codes octaux mis les uns à la suite des autres à la fin de la séquence d'octets formant le tableau 102 (bien que sur la **Figure 2c** ces codes octaux sont représentés sous forme de lignes distinctes).

Le premier paramètre est par exemple remplacé, dans le tableau de bytecodes, par une information d'adresse mémoire 210 qui sert à désigner la zone mémoire cible où les paramètres déplacés sont stockés. Cette information peut être une adresse absolue ou une adresse relative (un offset) indiquant l'emplacement du premier paramètre déplacé.

Dans un mode de réalisation, l'adresse mémoire 210 est en clair. En variante, elle est masquée à l'aide d'une valeur aléatoire. A titre d'exemple, la fonction « ou exclusif » XOR peut être utilisée pour réaliser ce masquage. Une même valeur tirée aléatoirement par le dispositif 103 peut être utilisée pour l'ensemble des modifications d'un même fichier 102 (donc pour masquer l'ensemble des informations d'adresse mémoire pointant sur les paramètres déplacés), voire de plusieurs fichiers 102 relatifs à une même application (applet), voire encore de plusieurs fichiers. De préférence cependant, une nouvelle valeur aléatoire est tirée pour chaque nouveau fichier 102 à charger dans le dispositif, de sorte à ne pas compromettre la sécurité d'un fichier chargé et sécurisé selon l'invention lorsque la valeur aléatoire de masquage d'un autre fichier est découverte.

Les autres paramètres sont remplacés, dans le tableau de bytecodes 111, par des codes octaux de substitution 220 non liés aux valeurs des paramètres déplacés, notamment des instructions de détection d'une attaque dont l'exécution (des instructions) est indicatrice d'une erreur d'exécution du programme informatique.

Ces codes octaux de substitution (incluant l'information d'adresse mémoire) sont en même nombre que ceux formant les paramètres déplacés. Cela permet de ne pas modifier la longueur du tableau des bytecodes.

Le fichier modifié 110 est ainsi obtenu en mémoire vive 104.

Le fichier 102 peut par exemple être modifié au fur et à mesure de son chargement en mémoire 105. Par exemple, chaque fois qu'une instruction de branchement conditionnel composé 200 est rencontrée dans le fichier 102, les bytecodes de paramètre 205 associés à l'instruction rencontrée sont déplacés dans la table additionnelle 112 (à la suite des précédents) et sont remplacés par les codes octaux de substitution 210/220 souhaités.

Ainsi, plusieurs, voire toutes les instructions de branchement conditionnel composé, peuvent être sécurisées avec les enseignements de l'invention.

Le fichier 102 peut par exemple être modifié à la volée lors de son chargement dans le dispositif informatique 103. De manière alternative, ce fichier peut être stocké entièrement dans l'unité de mémoire vive avant d'entamer sa modification.

Une fois le fichier 102 modifié, le fichier 110 ainsi obtenu, composé du tableau de bytecodes modifié 111 et de la table additionnelle de paramètres 112, est stocké dans l'unité de mémoire non volatile 105.

Comme schématiquement illustré sur la **Figure 1****,** les instructions du programme informatique (c'est-à-dire le tableau de bytecodes 111) sont mémorisées dans une première zone mémoire logique continue. Cette zone mémoire a la même taille que celle qui aurait été utilisée pour stocker le fichier 102 en l'absence de l'invention. Elle inclut donc les bytecodes d'instruction et les bytecodes de paramètre associés (les champs optionnels de paramètres initialement prévus pour stocker les paramètres). La zone mémoire cible (c'est-à-dire la table additionnelle de paramètres 112) est extérieure au tableau de bytecodes 111, donc distincte de la première zone mémoire logique au sein de la même mémoire physique 105.

Dans cet exemple, la table additionnelle de paramètres 112 est contigüe au tableau de bytecodes 111, à la suite de celui-ci. D'autres variantes sans contiguïté peuvent être envisagées dans le cadre de la présente invention.

Afin de permettre l'exécution des instructions du tableau de bytecodes 111, la première zone mémoire correspondante est configurée en zone mémoire exécutable. Dans un mode de réalisation, la zone mémoire cible stockant la table additionnelle de paramètres 112 est configurée en zone mémoire non-exécutable par l'unité de traitement 106.

Le processus d'installation peut être ainsi terminé.

La **Figure 2c** illustre le fichier 110 obtenu à partir du fichier de la **Figure 2b** (les paramètres sont des entiers courts sur 2 octets).

Les paramètres de l'instruction slookupswitch ont été déplacés dans la table additionnelle de paramètres 112. Dans cet exemple, chaque paramètre individuel (offset, npairs, value) est enregistré à une adresse spécifique (ici représentée par l'index 00 à 07 correspondant à des offsets octaux depuis le début de la table). Les paramètres sont enregistrés les uns à la suite des autres, dans le même ordre que dans le fichier 102. Cela permet de simplifier le traitement par l'unité de traitement 106 lors de l'exécution du fichier 110.

Dans le fichier .CAP 111, le premier bytecode de paramètre associé à l'instruction slookupswitch (celui qui mémorise normalement l'offset du cas par défaut) est mis à l'adresse relative 00 de la table de paramètre 112 (qui correspond à la suite immédiate du fichier .CAP. La fin du fichier .CAP 111 est connue puisqu'elle est identique à celle du fichier .CAP 102). Dans l'exemple représenté, la valeur aléatoire ABCD est utilisée pour masquer cette adresse relative : ABCD XOR 00 = ABCD.

Les autres bytecodes de paramètre associés à l'instruction slookupswitch (lignes 6 à 9) sont remplacés par un même nombre de codes octaux de substitution, notés DEAD. Chacun de ces codes DEAD peut correspondre à une instruction de contremesure, par exemple bloquant (temporairement ou définitivement) le dispositif informatique 103.

Les autres bytecodes du fichier 102 demeurent inchangés, tant dans leur contenu que dans leur position (numéro de ligne ou de bytecode) au sein du fichier.

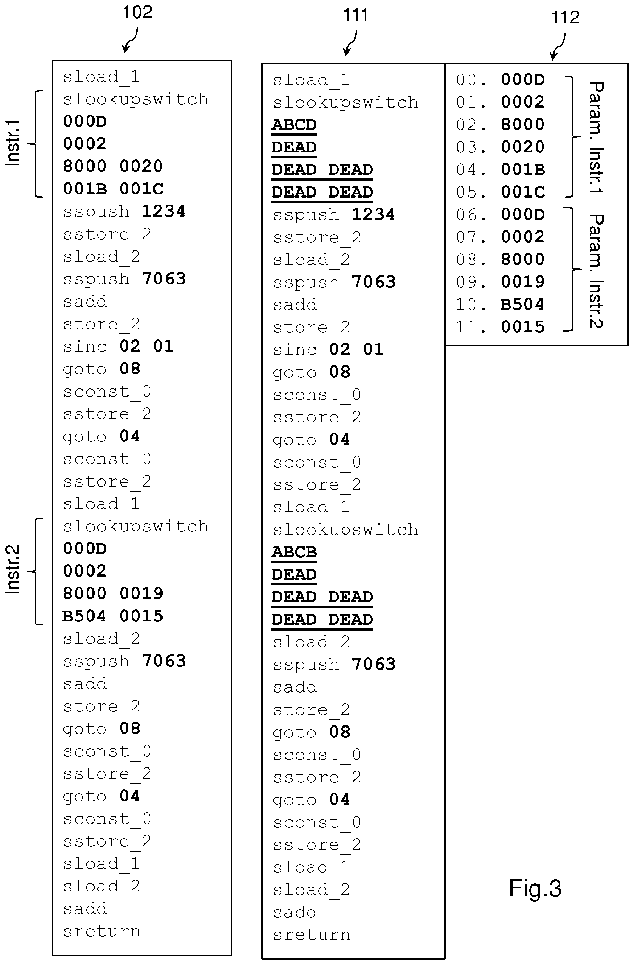

La **figure 3** illustre un autre cas de fichier 102 comprenant plusieurs instructions de branchement conditionnel composé, ici Instr.1 et Instr.2. Ces deux instructions sont codées à l'aide d'un bytecode d'instruction et de six bytecodes de paramètre (sur quatre lignes, définissant deux blocs « case » en plus du cas par défaut dans les fonctions « switch » appelées). L'invention s'applique également lorsque plusieurs instructions ont un nombre différent de bytecodes de paramètre.

Par la mise en œuvre de l'invention, chaque fois, les six paramètres sont déplacés dans la table additionnelle 112. Les six paramètres de la première instruction Instr.1 sont stockés aux adresses mémoires 00. à 05. (relativement à la fin du fichier .CAP 111), alors que les six paramètres de la deuxième instruction Instr.2 sont stockés à la suite, c'est-à-dire aux adresses mémoires relatives suivantes (06. à 11.).

Les six bytecodes de paramètre des instructions instr.1 et instr.2 dans le fichier .CAP sont alors remplacés par des codes octaux de substitution (ces six bytecodes sont soulignés dans la **Figure 3****).**

Le premier bytecode est remplacé par l'adresse masquée de mémorisation des paramètres. En utilisant ABCD comme masque, l'adresse masquée pour les paramètres d'Instr.1 est ABCD (ABCD XOR 00 = ABCD), et celle pour les paramètres d'Instr.2 est ABCB (ABCD XOR 06 = ABCB).

Les cinq autres bytecodes sont ici remplacés par des codes octaux DEAD, permettant par exemple de bloquer la carte à puce 103 en cas d'exécution.

Aussi, si l'exécution normale du fichier .CAP 111 est déroutée vers l'un des bytecodes de paramètre d'une instruction (ici de branchement conditionnel composé), soit l'instruction réalisée est inconnue du pirate (par exemple si le premier bytecode contenant l'adresse masquée est exécutée en tant qu'instruction), soit une instruction de détection d'attaque DEAD est exécutée permettant au dispositif informatique 103 de réaliser des contremesures efficaces.

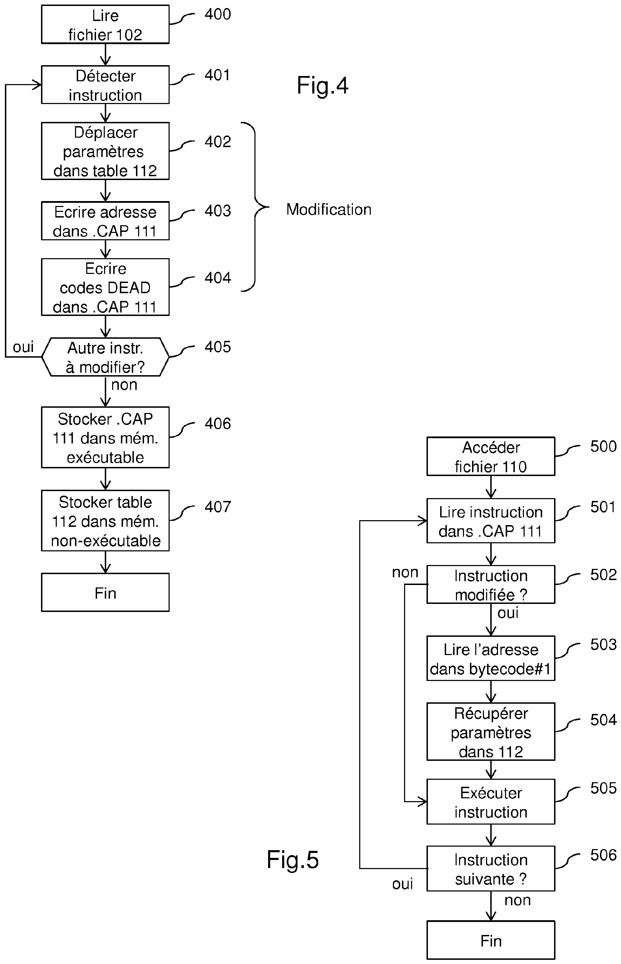

La **Figure 4** illustre, à l'aide d'un ordinogramme, des étapes d'un procédé de chargement et de sécurisation d'un programme informatique selon des modes de réalisation de l'invention. Ce procédé peut être mis en œuvre par un module de chargement (loader) au sein du dispositif 103 devant charger ce programme informatique 102.

Lors de l'étape 400, un fichier informatique 102 comportant des opérations d'un programme informatique à installer est lu depuis une mémoire ou obtenu par une interface de communication du dispositif informatique 103, pour être chargé dans celui-ci. Les opérations sont représentées par des bytecodes codant des instructions élémentaires interprétables pas une machine virtuelle par exemple.

Lors de cette étape, les bytecodes du fichier 102 sont progressivement écrits en mémoire vive 104.

L'étape 401 consiste à analyser en tout ou partie le fichier 102 en mémoire vive pour déterminer une instruction à sécuriser selon l'invention. Pour connaître les instructions à modifier, le module de chargement peut comprendre une liste d'instructions qui sont codées, dans le langage intermédiaire, à l'aide d'un bytecode d'instruction et de un ou plusieurs bytecodes de paramètre.

Lorsque l'étape 401 détermine une telle instruction (dénommée instruction courante ci-dessous), elle est modifiée au cours des étapes 402 à 404.

Tout d'abord à l'étape 402, les paramètres composant les bytecodes de paramètre de cette instruction courante sont déplacés (au sein de la mémoire vive) dans une table additionnelle de paramètres 112. Chaque paramètre (sur deux ou quatre octets selon le typage des opérandes manipulés par l'instruction concernée) est stocké comme une entrée distincte dans la table 112, en conservant leur ordre d'apparition dans le fichier d'origine 102.

Puis à l'étape 403, une information d'adresse mémoire désignant la première entrée de table 112 stockant les paramètres de l'instruction courante est déterminée. Il peut s'agir par exemple d'un index identifiant l'entrée (comme c'est le cas par exemple dans les exemples des **Figures 2c** et **3****).** Dans ce cas cette information représente une adresse mémoire relative (par rapport au début de la table 112). Bien entendu, d'autres formats d'information d'adresse mémoire peuvent être utilisés, comme une adresse mémoire absolue.

Optionnellement (c'est le cas dans les exemples des **Figures 2c** et **3****),** cette information est masquée à l'aide d'une valeur aléatoire tirée par le module de chargement pour le fichier 102 à charger. Cette valeur aléatoire est mémorisée (éventuellement protégée/masquée à l'aide d'une clé propre au dispositif 103) dans la mémoire non volatile 105 pour permettre le démasquage de l'adresse lors de l'exécution du fichier chargé (voir **Figure 5****).**

L'information (masquée) d'adresse mémoire est alors écrite (ici en mémoire vive) à la place du premier bytecode de paramètre (désormais déplacé) de l'instruction courante.

Puis à l'étape 404, les autres bytecodes de paramètre de l'instruction courante sont remplis (en mémoire vive) à l'aide de codes octaux de substitution, notamment des instructions (des codes d'opération _ opcode) de détection d'une attaque.

L'étape suivante 405 consiste à déterminer s'il existe une autre instruction à modifier dans la partie de fichier en mémoire vive.

Si oui cette autre instruction devient l'instruction courante dans une nouvelle itération de l'étape 401. Dans ce cas, les paramètres de cette nouvelle instruction courante seront écrits dans la table additionnelle 112 à la suite des entrées déjà utilisées.

Si non le procédé passe à la dernière partie du chargement du fichier 102 dans le dispositif 103, à savoir le chargement du fichier modifié 110 en mémoire non volatile 105.

A l'étape 406, le fichier modifié .CAP 111 est stocké dans la mémoire non volatile 105 dans une zone mémoire exécutable. Le module de chargement peut par exemple modifier la propriété exécutable ou non de cette zone mémoire après que le fichier modifié .CAP 111 ait été écrit dans la mémoire non volatile.

A l'étape 407, la table additionnelle de paramètres 112 est écrite en mémoire non volatile 105, de préférence dans une zone mémoire non exécutable qui, en outre, est contigüe avec la zone mémoire stockant le fichier modifié .CAP 111 (et après celle-ci). Ainsi le fichier modifié 110 est stocké dans un seul bloc (continu) de mémoire. En outre, les informations d'adresse utilisées sont des adresses relatives par rapport à la fin du fichier .CAP 111. D'autres variantes sans contiguïté peuvent être envisagées.

Il s'ensuit que le fichier 102 a été chargé, de façon sécurisé, dans le dispositif 103.

Le procédé de chargement et de sécurisation prend alors fin.

Dans le cas d'un dispositif informatique 103 doté d'une mémoire vive 104 de faible capacité, par exemple une carte à puce, la modification (401-405) du fichier .CAP et son chargement (406) en mémoire non volatile 105 peut être effectué à la volée. Il s'agit dans ce cas de traiter le fichier .CAP petite portion par petite portion, et ainsi ces portions modifiées ou non sont chargées successivement dans la mémoire non volatile 105 indépendamment de savoir s'il reste des instructions à modifier dans le reste du fichier.

L'exploitation d'un tel fichier modifié 110 est illustrée en **Figure 5****.** Le procédé de cette figure est par exemple mis en œuvre par l'unité de traitement 106, notamment lors de l'exécution d'un interpréteur de code intermédiaire ou d'une machine virtuelle Java.

A réception d'une instruction d'exécution du fichier 110 (par exemple une application lancée sur le dispositif 103), le fichier 110 est accédé en mémoire non volatile 105 au cours de l'étape 500.

Des instructions composant le fichier .CAP 111 vont être successivement exécutées, bytecode d'instruction après bytecode d'instruction.

Pour ce faire, un premier bytecode d'instruction est lu dans le fichier .CAP 111 à l'étape 501.

Il est alors déterminé à l'étape 502 s'il s'agit d'un bytecode sécurisé selon l'invention. Il est à noter que pour exécuter les bytecodes, l'interpréteur ou machine virtuelle connaît l'ensemble des codes d'opération disponibles et la façon dont ils doivent être exécutés. Ainsi, l'interpréteur ou machine virtuelle sait quels codes d'opération nécessitent des bytecodes de paramètre additionnels au bytecode d'instruction portant le code d'opération. Par conséquent, la lecture du premier octet (l'opcode) du bytecode lu à l'étape 501 peut être suffisante pour déterminer s'il s'agit d'une instruction sécurisée selon l'invention.

Dans la négative, l'instruction est exécutée de façon classique à l'étape 505.

Dans l'affirmative, le premier bytecode de paramètre qui suit immédiatement le bytecode d'instruction (donc la ligne suivante dans les représentations des **Figures 2c** et **3** par exemple) est lu en mémoire à l'étape 503 pour obtenir l'adresse (éventuellement masquée) de stockage des paramètres de l'instruction. Le cas échéant, cette adresse est démasquée à l'aide du masque aléatoire mémorisé par le dispositif (il s'agit par exemple d'un démasquage par application d'un « ou exclusif »).

On notera que l'interpréteur ou machine virtuelle selon l'invention est légèrement modifié par rapport à un interpréteur ou machine virtuelle classique dans la mesure où il est capable de mettre en œuvre les étapes 502 à 504 pour traiter les instructions sécurisées. Cette modification concerne, dans les exemples ici, le traitement des instructions de branchement conditionnel composé. Le traitement des autres instructions n'est alors pas modifié dans l'interpréteur ou machine virtuelle.

Possiblement, l'interpréteur ou machine virtuelle est configuré pour pouvoir exécuter à la fois le fichier modifié et le fichier non modifié. Dans ce cas, des moyens permettant de déterminer de quel fichier il s'agit peuvent être mis en place (ajout d'un bit de signalisation, détermination de bytecode DEAD dans le fichier, etc.).

A l'étape 504, l'interpréteur ou machine virtuelle utilise l'adresse obtenue à l'étape précédente pour accéder aux paramètres de l'instruction en cours d'exécution.

Il peut s'agir simplement de lire l'entrée portant l'index égal à l'adresse obtenue, puis les entrées suivantes de façon classique pour déterminer la dernière entrée à lire.

Dans l'exemple des instructions <t>lookupswitch, le deuxième paramètre (npairs) permet de savoir combien de couples d'entrées suivants (contenant valeur et offset) doivent être lus.

De même, dans l'exemple des instructions <t>tableswitch, les deuxième et troisième paramètres (valeur basse et valeur haute) permettent de savoir combien d'entrées suivantes (contenant des offsets) doivent être lues.

Une fois que ces paramètres ont été récupérés, les bytecodes de paramètre peuvent être reconstitués en mémoire vive 104 du dispositif 103. De la sorte, l'interpréteur ou machine virtuelle se retrouve dans la même situation que lorsqu'il lit le fichier .CAP 102 non modifié.

Par conséquent, l'étape suivante 505 consiste à exécuter le bytecode d'instruction de façon conventionnelle, c'est-à-dire avec les bytecodes de paramètre reconstruits pour les instructions ayant été sécurisées.

A l'étape 506, il est déterminé si une nouvelle instruction doit être exécutée. Dans l'affirmative, le procédé retourne à l'étape 501 pour lire cette nouvelle instruction dans le fichier .CAP 111. Autrement, le procédé prend fin.

La présente invention telle que décrite ci-dessus permet ainsi de sécuriser les programmes informatiques contre des attaques tirant parti des bytecodes de paramètre pour les faire exécuter comme de simples instructions (un paramètre étant alors traiter de façon malicieuse comme un ou plusieurs codes d'opération _ opcode).

Cette sécurisation peut se faire à la volée lors du chargement d'une applet dans un dispositif informatique cible, évitant qu'un pirate ait au final la main sur le code intermédiaire réellement exécuté par le dispositif cible. Le pirate ne peut donc introduire efficacement du code malicieux.

Le remplacement code octal par code octal des bytecodes de paramètre permet de ne pas modifier le reste du code intermédiaire (notamment il n'y a pas lieu de recalculer d'éventuels offsets de sauts d'instructions dans le code).

Enfin, les concepteurs de plateforme d'exécution (carte à puce, interpréteur) ont la possibilité de définir (via les instructions de détection d'attaque DEAD ou les contremesures prises) précisément les politiques de sécurité souhaitées (par exemple supprimer des données secrètes, ou bloquer le document électronique).

Le surcoût de cette sécurisation en termes de mémoire reste limité. Il s'agit principalement de la table additionnelle 112 (pour stocker les paramètres). Lorsque la sécurisation porte sur les instructions de branchement conditionnel composé, les inventeurs ont constaté un surcoût de mémoire d'environ 2% (pour un ensemble d'applets testées). Bien entendu, ce surcoût mémoire dépend directement du nombre d'occurrences de telles instructions dans le fichier en code intermédiaire.

Le surcoût de cette sécurisation lors de l'exécution du programme chargé est réduit, limité à la redirection vers la table additionnelle 112 pour récupérer les paramètres.

En pratique, les interpréteurs ou machines virtuelles ne permettent pas, au cours de l'exécution d'un tableau de bytecodes (le fichier .CAP 111 ici) de sauter hors de ce tableau. Ainsi, le déplacement des paramètres dans une table additionnelle garantit qu'un pirate ne pourra y avoir accès et donc ne pourra tenter de les exécuter comme de simples instructions. La lutte contre cette forme d'attaque est en outre renforcée ici par le masquage préférentiel des adresses pointant vers cette table additionnelle, mais également par le stockage de cette table additionnelle dans une mémoire préférentiellement non exécutable.

La présente invention a été décrite et illustrée dans la présente description détaillée en référence aux figures jointes. Toutefois la présente invention ne se limite pas aux formes de réalisation présentées. D'autres variantes, modes de réalisation et combinaisons de caractéristiques peuvent être déduits et mis en œuvre par la personne du métier à la lecture de la présente description et des figures annexées.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes n'exclut pas en effet la possibilité de les combiner. Les signes de référence ne sauraient être compris comme limitant la portée de l'invention.

## Revendications

1. Procédé de sécurisation d'un programme informatique (102) en langage intermédiaire exécutable par une unité de traitement (106), le programme informatique comprenant des instructions formées chacune d'un code d'opération suivi de paramètres optionnels, le procédé comprenant une étape de mémorisation (406) des instructions en mémoire (111) où chaque code d'opération mémorisé est suivi de champs optionnels de paramètres pour stocker les paramètres optionnels correspondants, le procédé étant **caractérisé en ce que** :
une pluralité de paramètres (205) d'une même première instruction (Instr.1, Instr.2) du programme informatique est stockée (402) dans une zone mémoire cible (112) autre que les champs optionnels de paramètres (205) qui font suite immédiate, dans la mémoire, au code d'opération (200) de la première instruction,
au moins l'un des champs optionnels de la première instruction comporte une information d'adresse mémoire (210) désignant la zone mémoire cible (112) où la pluralité de paramètres (205) est stockée.

2. Procédé de sécurisation selon la revendication 1, dans lequel les autres champs optionnels de paramètres (205) prévus pour stocker la pluralité de paramètres comportent des codes octaux de substitution (220) non liés auxdits paramètres et en nombre équivalent aux codes octaux formant les paramètres (205) qu'ils remplacent.

3. Procédé de sécurisation selon la revendication 2, les codes octaux de substitution comprennent une ou plusieurs instructions de détection d'une attaque (220) dont l'exécution est indicatrice d'une erreur d'exécution du programme informatique.

4. Procédé de sécurisation selon l'une des revendications 1 à 3, dans lequel tous les paramètres (205) de ladite première instruction (Instr.1, Instr.2) sont stockés (402) dans la zone mémoire cible (112), et tous les champs optionnels de paramètres (205) prévus pour les stocker en mémoire contiennent un nombre équivalent de codes octaux de substitution (220), incluant l'information d'adresse mémoire (210).

5. Procédé de sécurisation selon l'une des revendications 1 à 4, dans lequel les instructions du programme informatique sont mémorisées (406) dans une première zone mémoire logique continue (111) et la zone mémoire cible (112) est distincte de la première zone mémoire logique au sein de la même mémoire physique (105).

6. Procédé de sécurisation selon la revendication 5, dans lequel la première zone mémoire (111) est une zone mémoire exécutable par l'unité de traitement (106) et la zone mémoire cible (112) est une zone mémoire non-exécutable par l'unité de traitement.

7. Procédé de sécurisation selon l'une des revendications 1 à 6, dans lequel ladite première instruction (Instr.1, Instr.2) est une instruction de branchement conditionnel composé.

8. Procédé de sécurisation selon l'une des revendications 1 à 7, dans lequel l'information d'adresse mémoire (210) est mémorisée (403) dans le premier champ optionnel de paramètres faisant suite immédiate, en mémoire, au code d'opération (200) de la première instruction.

9. Procédé de sécurisation selon l'une des revendications 1 à 8, dans lequel l'information d'adresse mémoire (210) est une adresse mémoire de la zone mémoire cible (112), masquée à l'aide d'une valeur aléatoire.

10. Procédé de sécurisation selon l'une des revendications 1 à 9, dans lequel une ou plusieurs pluralités de paramètres d'une ou plusieurs deuxièmes instructions du programme informatique sont également stockées dans la zone mémoire cible (112), à la suite des paramètres de la première instruction.

11. Procédé de sécurisation selon l'une des revendications 1 à 10, réalisé lors du chargement du programme informatique en mémoire non volatile (105) d'une entité électronique (103).

12. Procédé d'exécution, par une unité de traitement (106), d'un programme informatique (110) stocké en mémoire (105) dans un langage intermédiaire,
le programme informatique comprenant des instructions dans une première zone mémoire (111) où, pour chaque instruction (Instr.1, Instr.2), un code d'opération (200) est suivi de champs optionnels de paramètres (205) pour stocker des paramètres optionnels (205) de l'instruction, le procédé étant **caractérisé en ce qu'**il comprend, lors de l'exécution du code d'opération d'une première instruction du programme informatique, les étapes suivantes :
obtenir (503), d'un des champs optionnels de paramètres (205) qui font suite immédiate audit code d'opération (200), une information d'adresse mémoire (210) désignant une zone mémoire cible (112) autre que ces champs optionnels de paramètres,
lire (504), dans la zone mémoire cible (112) à l'aide de l'information d'adresse mémoire obtenue (210), une pluralité de paramètres (205) associés à la première instruction, et
exécuter (505) ladite première instruction à l'aide des paramètres ainsi lus.

13. Procédé d'exécution selon la revendication 12, dans lequel au moins un des champs optionnels de paramètres (205) de la première instruction comprend une instruction de détection d'une attaque (220), et si l'unité de traitement accède et exécute ledit champ optionnel comprenant l'instruction de détection d'une attaque, une erreur d'exécution du programme informatique est générée.

14. Dispositif informatique (103) comprenant une unité de traitement (106), une mémoire (104,105) qui lui est reliée et un programme informatique (102) en langage intermédiaire exécutable par l'unité de traitement, le programme informatique comprenant des instructions formées chacune d'un code d'opération suivi de paramètres optionnels, le dispositif étant configurée pour :
mémoriser des instructions en mémoire (111) où chaque code d'opération mémorisé est suivi de champs optionnels de paramètres pour stocker les paramètres optionnels correspondants,
stocker une pluralité de paramètres (205) d'une même première instruction (Instr.1, Instr.2) du programme informatique (102) dans une zone mémoire cible (112) autre que les champs optionnels de paramètres (205) qui font suite immédiate, dans la mémoire, au code d'opération (200) de la première instruction, et
écrire au moins l'un des champs optionnels pour qu'il comporte une information d'adresse mémoire (210) désignant la zone mémoire cible (112) où la pluralité de paramètres (205) est stockée.

15. Dispositif informatique (103) comprenant une unité de traitement (106), une mémoire (105) qui lui est reliée et un programme informatique (110) en langage intermédiaire exécutable par l'unité de traitement, le programme informatique comprenant des instructions (Instr.1, Instr.2) dans une première zone mémoire (111) où, pour chaque instruction, un code d'opération (200) est suivi de champs optionnels de paramètres (205) pour stocker des paramètres optionnels de l'instruction, le dispositif étant configurée pour effectuer les actions suivantes, lors de l'exécution du code d'opération d'une première instruction du programme informatique :
obtenir, d'un des champs optionnels de paramètres (205) qui font suite immédiate audit code d'opération (200), une information d'adresse mémoire (210) désignant une zone mémoire cible (112) autre que ces champs optionnels de paramètres,
lire, dans la zone mémoire cible (112) à l'aide de l'information d'adresse mémoire obtenue (210), une pluralité de paramètres (205) associés à la première instruction, et
exécuter ladite première instruction à l'aide des paramètres ainsi lus.

## Patentansprüche

1. Verfahren zur Sicherung eines Computerprogramms (102) in Zwischensprache, das durch eine Verarbeitungseinheit (106) ausführbar ist, wobei das Computerprogramm Anweisungen umfasst, die jeweils von einem Operationscode, gefolgt von wahlfreien Parametern, gebildet werden, wobei das Verfahren einen Schritt zum Speichern (406) der Anweisungen in Speicher (111) umfasst, in dem auf jeden gespeicherten Operationscode wahlfreie Parameterfelder zum Speichern der entsprechenden wahlfreien Parameter folgen, wobei das Verfahren **dadurch gekennzeichnet ist, dass**:
eine Vielzahl von Parametern (205) einer selben ersten Anweisung (Instr.1, Instr.2) des Computerprogramms in einem anderen Zielspeicherbereich (112) als die wahlfreien Parameterfelder (205) gespeichert werden (402), die in dem Speicher unmittelbar auf den Operationscode (200) der ersten Anweisung folgen,
mindestens eines von den wahlfreien Feldern der ersten Anweisung eine Speicheradressinformation (210) umfasst, die den Zielspeicherbereich (112) bezeichnet, wo die Vielzahl von Parametern (205) gespeichert sind.

2. Sicherungsverfahren nach Anspruch 1, wobei die anderen wahlfreien Parameterfelder (205), die zum Speichern der Vielzahl von Parametern vorgesehen sind, Ersetzungsoktalcodes (220), die nicht mit den Parametern verbunden sind, und in einer Anzahl umfassen, die den Oktalcodes gleichwertig ist, die die Parameter (205) bilden, die sie ersetzen.

3. Sicherungsverfahren nach Anspruch 2, wobei die Ersetzungsoktalcodes eine oder mehrere Anweisungen zur Feststellung eines Angriffs (220) umfassen, deren Ausführung auf einen Ausführungsfehler des Computerprogramms hinweist.

4. Sicherungsverfahren nach einem der Ansprüche 1 bis 3, wobei alle Parameter (205) der ersten Anweisung (Instr.1, Instr.2) in dem Zielspeicherbereich (112) gespeichert werden (402) und alle wahlfreien Parameterfelder (205), die vorgesehen sind, um sie in Speicher zu speichern, eine gleichwertige Anzahl von Ersetzungsoktalcodes (220) enthalten, die die Speicheradressinformation (210) beinhalten.

5. Sicherungsverfahren nach einem der Ansprüche 1 bis 4, wobei die Anweisungen des Computerprogramms in einem ersten kontinuierlichen logischen Speicherbereich (111) gespeichert werden (406), und der Zielspeicherbereich (112) sich von dem ersten logischen Speicherbereich im selben physikalischen Speicher (105) unterscheidet.

6. Sicherungsverfahren nach Anspruch 5, wobei der erste Speicherbereich (111) ein Speicherbereich ist, der durch die Verarbeitungseinheit (106) ausführbar ist, und der Zielspeicherbereich (112) ein Speicherbereich ist, der nicht durch die Verarbeitungseinheit ausführbar ist.

7. Sicherungsverfahren nach einem der Ansprüche 1 bis 6, wobei die erste Anweisung (Instr.1, Instr.2) eine zusammengesetzte bedingte Verzweigungsanweisung ist.

8. Sicherungsverfahren nach einem der Ansprüche 1 bis 7, wobei die Speicheradressinformation (210) in dem ersten wahlfreien Parameterfeld gespeichert wird (403), das im Speicher unmittelbar auf den Operationscode (200) der ersten Anweisung folgt.

9. Sicherungsverfahren nach einem der Ansprüche 1 bis 8, wobei die Speicheradressinformation (210) eine Speicheradresse des Zielspeicherbereichs (112) ist, die mittels eines Zufallswerts maskiert wird.

10. Sicherungsverfahren nach einem der Ansprüche 1 bis 9, wobei eine oder mehrere Vielzahlen von Parametern von einer oder mehreren zweiten Anweisungen des Computerprogramms ebenfalls in dem Zielspeicherbereich (112) im Anschluss an die Parameter der ersten Anweisung gespeichert werden.

11. Sicherungsverfahren nach einem der Ansprüche 1 bis 10, das beim Laden des Computerprogramms in nichtflüchtigen Speicher (105) einer elektronischen Instanz (103) ausgeführt wird.

12. Verfahren zur Ausführung eines in einer Zwischensprache in Speicher (105) gespeicherten Computerprogramms (110) durch eine Verarbeitungseinheit (106),
wobei das Computerprogram Anweisungen in einem ersten Speicherbereich (111) umfasst, in dem für jede Anweisung (Instr.1, Instr.2) auf einen Operationscode (200) wahlfreie Parameterfelder (205) zum Speichern von wahlfreien Parametern (205) der Anweisung folgen, wobei das Verfahren **dadurch gekennzeichnet ist, dass** es bei der Ausführung des Operationscodes einer ersten Anweisung des Computerprogramms die folgenden Schritte umfasst:
Erhalten (503), von einem der wahlfreien Parameterfelder (205), die unmittelbar auf den Operationscode (200) folgen, einer Speicheradressinformation (210), die einen anderen Zielspeicherbereich (112) als diese wahlfreien Parameterfelder bezeichnet,
Lesen (504) einer Vielzahl von Parametern (205), die der ersten Anweisung zugehörig sind, in dem Zielspeicherbereich (112) mittels der erhaltenen Zielspeicheradresse (210), und
Ausführen (505) der ersten Anweisung mittels der so gelesenen Parameter.

13. Ausführungsverfahren nach Anspruch 12, wobei mindestens eines der wahlfreien Parameterfelder (205) der ersten Anweisung eine Anweisung zur Feststellung eines Angriffs (220) umfasst und, wenn die Verarbeitungseinheit auf das wahlfreie Feld, das die Anweisung zur Feststellung eines Angriffs umfasst, zugreift und es ausführt, ein Ausführungsfehler des Computerprogramms erzeugt wird.

14. Computervorrichtung (103), die eine Verarbeitungseinheit (106), einen Speicher (104, 105), der damit verbunden ist, und ein Computerprogramm (102) in Zwischensprache umfasst, das durch die Verarbeitungseinheit ausführbar ist, wobei das Computerprogramm Anweisungen umfasst, die jeweils aus einem Operationscode, gefolgt von wahlfreien Parametern, gebildet sind, wobei die Vorrichtung ausgestaltet ist zum:
Speichern von Speicheranweisungen (111), in denen auf jeden gespeicherten Operationscode wahlfreie Parameterfelder zum Speichern der entsprechenden wahlfreien Parameter folgen,
Speichern einer Vielzahl von Parametern (205) einer selben ersten Anweisung (Instr.1, Instr.2) des Computerprogramms (102) in einem anderen Speicherbereich (112) als die wahlfreien Parameterfelder (205), die in dem Speicher unmittelbar auf den Operationscode (200) der ersten Anweisung folgen, und
Beschreiben mindestens eines der wahlfreien Felder, damit es eine Speicheradressinformation (210) umfasst, die den Zielspeicherbereich (112) bezeichnet, in dem die Vielzahl von Parametern (205) gespeichert sind.

15. Computervorrichtung (103), die eine Verarbeitungseinheit (106), einen Speicher (105), der mit ihr verbunden ist, und ein Computerprogramm (110) in Zwischensprache umfasst, das durch die Verarbeitungseinheit ausführbar ist, wobei das Computerprodukt Anweisungen (Instr.1, Instr.2) in einem ersten Speicherbereich (111) umfasst, in dem für jede Anweisung auf einen Operationscode (200) wahlfreie Parameterfelder (205) zum Speichern wahlfreier Parameter der Anweisung folgen, wobei die Vorrichtung ausgestaltet ist, um bei der Ausführung des Operationscodes einer ersten Anweisung des Computerprogramms die folgenden Aktionen durchzuführen:
Erhalten, in einem der wahlfreien Parameterfelder (205), die unmittelbar auf den Anweisungscode (200) folgen, einer Speicheradressinformation (210), die einen anderen Zielspeicherbereich (112) als diese wahlfreien Parameterfelder bezeichnet,
Lesen, in dem Zielspeicherbereich (112), mittels der erhaltenen Speicheradressinformation (210), einer Vielzahl von Parametern (205), die der ersten Anweisung zugehörig sind, und
Ausführen der ersten Anweisung mittels der so gelesenen Parameter.

## Claims

1. A method for securing a computer program (102) in intermediate language executable by a processing unit (106), the computer program comprising instructions each formed of an operation code followed by optional parameters, the method comprising a step of storing (406) the instructions in memory (111) where each stored operation code is followed by optional parameter fields to store the corresponding optional parameters, the method being **characterized in that**:
a plurality of parameters (205) of a same first instruction (Instr.1, Instr.2) of the computer program is stored (402) in a target memory area (112) other than the optional parameter fields (205) that immediately follow, in the memory, the operation code (200) of the first instruction,
at least one of the optional fields of the first instruction comprises memory address information (210) designating the target memory area (112) where the plurality of parameters (205) is stored.

2. The securing method according to claim 1, wherein the others optional parameter fields (205) provided to store the plurality of parameters comprise substitution bytecodes (220) that are not linked to said parameters and of a number equivalent to the bytecodes forming the parameters (205) they replace.

3. The securing method according to claim 2, wherein the substitution bytecodes comprise one or several attack detection instructions (220) whose execution is indicative of an error in executing the computer program.

4. The securing method according to any of claims 1 to 3, wherein all the parameters (205) of said first instruction (Instr.1, Instr.2) are stored (402) in the target memory area (112), and all the optional parameter fields (205) provided to store them in memory contain an equivalent number of substitution bytecodes (220), including the memory address information (210).

5. The securing method according to any of claims 1 to 4, wherein the computer program instructions are stored (406) in a first continuous logical memory area (111) and the target memory area (112) is distinct from the first logical memory area within the same physical memory (105).

6. The securing method according to claim 5, wherein the first memory area (111) is a memory area executable by the processing unit (106) and the target memory area (112) is a memory area non-executable by the processing unit.

7. The securing method according to any of claims 1 to 6, wherein said first instruction (Instr.1, Instr.2) is an associative branch instruction.

8. The securing method according to any of claims 1 to 7, wherein the memory address information (210) is stored (403) in the first optional parameter field immediately following, in memory, the operation code (200) of the first instruction.

9. The securing method according to any of claims 1 to 8, wherein the memory address information (210) is a memory address of the target memory area (112), hidden using a random value.

10. The securing method according to any of claims 1 to 9, wherein one or several pluralities of parameters of one or several second instructions of the computer program are also stored in the target memory area (112), following the parameters of the first instruction.

11. The securing method according to any of claims 1 to 10, carried out during the loading the computer program in non-volatile memory (105) of an electronic entity (103).

12. A method for executing, by a processing unit (106), a computer program (110) stored in memory (105) in an intermediate language,
the computer program comprising instructions in a first memory area (111) where, for each instruction (Instr.1, Instr.2), an operation code (200) is followed by optional parameter fields (205) to store optional parameters (205) of the instruction, the method being **characterized in that** it comprises, during the execution of the operation code of a first instruction of the computer program, the following steps:
obtaining (503), one of the optional parameter fields (205) that immediately follow said operation code (200), memory address information (210) designating a target memory area (112) other than these optional parameter fields,
reading (504), in the target memory area (112) using the obtained memory address information (210), a plurality of parameters (205) associated with the first instruction, and
executing (505) said first instruction using the thus read parameters.

13. The execution method according to claim 12, wherein at least one of the optional parameter fields (205) of the first instruction comprises an attack detection instruction (220), and if the processing unit accesses and executes said optional field comprising the attack detection instruction, an error in executing the computer program is generated.

14. A computer device (103) comprising a processing unit (106), a memory (104, 105) connected thereto and a computer program (102) in intermediate language executable by the processing unit, the computer program comprising instructions each formed of an operation code followed by optional parameters, the device being configured to:
store instructions in memory (111) where each stored operation code is followed by optional parameter fields to store the corresponding optional parameters,
store a plurality of parameters (205) of a same first instruction (Instr.1, Instr.2) of the computer program (102) in a target memory area (112) other than the optional parameter fields (205) that immediately follow, in the memory, the operation code (200) of the first instruction, and
write at least one of the optional fields so that it comprises memory address information (210) designating the target memory area (112) where the plurality of parameters (205) is stored.

15. A computer device (103) comprising a processing unit (106), a memory (105) connected thereto and a computer program (110) in intermediate language executable by the processing unit, the computer program comprising instructions (Instr.1, Instr.2) in a first memory area (111) where, for each instruction, an operation code (200) is followed by optional parameter fields (205) to store optional parameters of the instruction, the device being configured to perform the following actions, during the execution of the operation code of a first instruction of the computer program:
obtaining, from one of the optional parameter fields (205) that immediately follow said operation code (200), memory address information (210) designating a target memory area (112) other than these optional parameter fields,
reading, in the target memory area (112) using the obtained memory address information (210), a plurality of parameters (205) associated with the first instruction, and
executing said first instruction using the thus read parameters.
